(19) Europäisches Patentamt
European Patent Office
Office européen des brevets

(11) Veröffentlichungsnummer: **0 034 265**
**B1**

(12) # EUROPÄISCHE PATENTSCHRIFT

(45) Veröffentlichungstag der Patentschrift: **30.11.83**

(51) Int. Cl.³: **C 08 L 69/00**, C 08 K 5/00

(21) Anmeldenummer: **81100438.1**

(22) Anmeldetag: **22.01.81**

(54) **Synergistisch wirksame Stoffgemische und ihre Verwendung zur antistatischen Ausrüstung von Polycarbonatformmassen.**

(30) Priorität: **05.02.80 DE 3004017**

(43) Veröffentlichungstag der Anmeldung: **26.08.81 Patentblatt 81/34**

(45) Bekanntmachung des Hinweises auf die Patenterteilung: **30.11.83 Patentblatt 83/48**

(84) Benannte Vertragsstaaten: **DE FR GB IT**

(56) Entgegenhaltungen:
**EP - A - 0 023 650**
**DE - A - 2 703 710**
**FR - A - 2 367 799**
**US - A - 4 131 575**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Schmidt, Manfred, Dr., 1020 North-Third-Street, New Martinsville West Virginia (US)**
Erfinder: **Wank, Joachim, Ing.-grad., Zuelpicher Strasse 7, D-4047 Dormagen (DE)**
Erfinder: **Reese, Eckart, Dr., Aggerstrasse 22, D-4047 Dormagen (DE)**
Erfinder: **Fraitag, Dieter, Dr., Hasenheide 10, D-4150 Krefeld 1 (DE)**
Erfinder: **Wangermann, Klaus, Dr., Bethelstrasse 50, D-4150 Krefeld (DE)**

EP 0 034 265 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Synergistisch wirksame Stoffgemische und ihre Verwendung zur antistatischen Ausrüstung von Polycarbonatformmassen

Gegenstand der vorliegenden Erfindung sind synergistisch wirksame Stoffgemische bestehend aus

A) 0,1 bis 1 Gew.-Teilen, vorzugsweise 0,3 bis 0,8 Gew.-Teilen an Alkali- oder Erdalkalisalzen von
A1) einer monomeren aromatischen Sulfonsäure der allgemeinen Formel (1)

$$(R)_{1-4}-A-[(SO_3)_nM_m]_y \qquad (1)$$

mit A Arylrest mit 1—4 aromatischen Ringen,
R $C_4$—$C_{20}$-Alkyl, $C_4$—$C_{20}$-Alkenyl, $C_6$—$C_{20}$-Cycloalkyl, $C_6$—$C_{20}$-Cycloalkenyl,
M Alkalimetall und m = n = 1,
M Erdalkalimetall und m = 1, n = 2,
y eine ganze Zahl von 1 bis 4, oder

A2) einer polymeren aromatischen (Poly)-sulfonsäure der allgemeinen Formel (2)

$$\left[ (R_1)_a - \underset{(SO_3)_n \quad M_m}{\underset{|}{(B)_b}} - (R_2)_c \right]_x \qquad (2)$$

mit $R_1$ $C_2$—$C_6$-Alkylen,
$R_2$ $R_1$ oder ein von $R_1$ unterschiedlicher $C_2$—$C_6$-Alkylenrest,
B 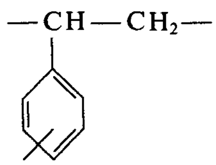

M, n, m entsprechend der Bedeutung der Formel (1),
a, b, c ganze Zahlen ≥1 mit der Maßgabe, daß b = 3 bis 30 und a + b + c = 100,
x eine Zahl der Größe, daß das polymere Salz ein mittleres Molekulargewicht (Gewichtsmittelmolekulargewicht) $\overline{M}_w$ von 800 bis $10^6$ besitzt, oder

A3) einer monomeren aromatischen Phosphonsäure der allgemeinen Formel (3)

$$(R)_{1-4}-A-[(PO_3)M_p]_z \qquad (3)$$

mit A, R entsprechend der Bedeutung der Formel (1),
M Alkalimetall und p = 2,
M Erdalkalimetall und p = 1,
z 1 oder 2, oder

A4) eines monomeren sauren aromatischen Phosphorsäureesters der allgemeinen Formel (4)

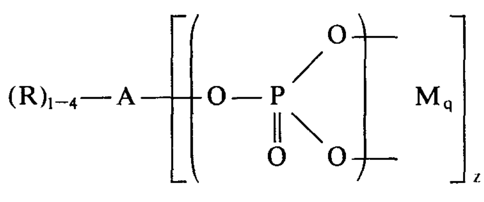

(4)

mit A, R, z entsprechend der Bedeutung der Formel (3),
M Alkalimetall und q = 2,
M Erdalkalimetall und q = 1 oder

A5) eines monomeren sauren aromatischen Phosphorsäureesters der allgemeinen Formel (5)

$$[(R)_{1-4}-A-O]_2-\overset{O}{\overset{\|}{P}}-C\}_e-M_d \qquad (5)$$

mit
A, R entsprechend der Bedeutung der Formel (1),
M Alkalimetall und d = e = 1,
M Erdalkalimetall mit d = 1 und e = 2,

und

B) 0,05 bis 0,5 Gew.-Teilen, vorzugsweise 0,2 bis 0,4 Gew.-Teilen an Verbindungen von

B2) neutralen $C_3-C_{18}$-Alkylestern aliphatischer $C_4-C_{18}$-Mono-, Di-, Tri- oder Tetracarbonsäuren, oder

B3) neutralen $C_3-C_{18}$-Alkylestern aromatischer $C_6-C_{12}$-Mono-, Di-, Tri- oder Tetracarbonsäuren.

Ein weiterer Gegenstand der Erfindung ist die Verwendung dieser erfindungsgemäßen Gemische zur antistatischen Ausrüstung von Polycarbonatformmasssen, insbesondere von Polycarbonatfolien und ganz besonders von Polycarbonatextrusionsfolien.

Ein weiterer Gegenstand der Erfindung sind Polycarbonatformmassen, insbesondere Polycarbonatfolien und ganz besonders Polycarbonatextrusionsfolien mit einem Gehalt von 0,1 Gew.-% bis 1 Gew.-%, vorzugsweise von 0,3 Gew.-% bis 0,8 Gew.-%, an Alkalisalzen oder Erdalkalisalzen gemäß Komponente A) und von 0,05 Gew.-% bis 0,5 Gew.-%, vorzugsweise von 0,2 Gew.-% bis 0,4 Gew.-%, an Verbindungen gemäß Komponente B), wobei die Gewichtsprozente sich jeweils auf Gesamtgewicht aus Polycarbonat plus Komponente A) plus Komponente B) beziehen und wobei die Komponenten A) und B) die eingangs definierte Bedeutung des synergistisch wirksamen Stoffgemischs haben. Gemäß deutscher Patentanmeldung P 2 931 172.6 (Le A 19 826) werden die unter A) subsummierten Alkali- und Erdalkalisalze als interne Antistatika für Polycarbonatfolien verwendet.

Überraschenderweise wurde nun gefunden, daß durch den kombinierten Einsatz der Salze gemäß A) mit den Verbindungen gemäß B) die Wirksamkeit der Alkalisalze und Erdalkalisalze gemäß A) so erhöht wird, daß beispielsweise bereits durch verminderte Mengen der antistatisch wirksamen Alkali- und Erdalkalisalze permanent antistatisch ausgerüstete Polycarbonatextrusionsfolien erhalten werden. Gleichzeitig wird dadurch eine Minderung des mechanischen Eigenschaftsniveaus, wie etwa der Zugfestigkeit, der Polycarbonatextrusionsfolie vermieden.

Eine Folie besitzt definitionsgemäß dann permanent antistatisches Verhalten, wenn die beispielsweise gemäß der DIN-Vorschrift 53 486 erfolgte elektrostatische Aufladung der Folienoberfläche einen Wert von $<100$ V/cm ergibt und eine Halbwertzeit $t_H$ der Entladung nicht mehr meßbar wird (untere Meßgrenze: ca. 4 sec).

Bei Polycarbonatslösungsfolien wird durch die Alkali- und Erdalkalisalze gemäß DE-OS-2 931 172 bereits ab einer Additivmenge von $\geq 0{,}07$ Gew.-% (bezogen auf Gesamtmenge des Polycarbonatgemischs) permanent antistatisches Verhalten erreicht (vergleiche Beispiele 3 und 4 der DE-OS-2 931 172. Bei Polycarbonatextrusionsfolien ist jedoch eine Menge von $\geq 2{,}0$ Gew.-% dieser Alkali- oder Erdalkalisalze notwendig, um permanent antistatisches Polycarbonatfolienmaterial zu erhalten.

Derartig hohe Additivmengen können jedoch bereits das mechanische Eigenschaftsniveau wie beispielsweise die Zugfestigkeit und die Reißdehnung von Polycarbonatextrusionsfolien insbesondere bei dünnen Foliendicken verschlechtern; sie verschlechtern außerdem Transparenz oder Transluzenz des Folienmaterials. Für viele Anwendungszwecke wie beispielsweise für die Herstellung antistatischer mit Glasfasern oder Glaskugeln gefüllter Polycarbonatstreulichtfolien ist es jedoch notwendig, eine Verminderung der Transluzenz oder eine Verminderung der Zugfestigkeit zu vermeiden.

Demgegenüber zeigen die erfindungsgemäßen Polycarbonatfolien keine wesentlichen Veränderungen ihrer elektrischen Eigenschaftswerte, insbesondere ihrer antistatischen Eigenschaften, unter Witterungs- oder mechanischer Beeinflussung.

Polycarbonatformmassen sind solche auf Basis aromatischer thermoplastischer Polycarbonate.

Unter aromatischen thermoplastischen Polycarbonaten im Sinne dieser Erfindung werden Homopolycarbonate und Copolycarbonate verstanden, denen z. B. ein oder mehrere der folgenden Bisphenole zugrundeliegen:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
$\alpha,\alpha'$-Bis-(hydroxyphenyl)-diisopropyl-benzole,

sowie deren kernalkylierte und kernhalogenierte Verbindungen. Diese und weitere geeignete aromatische Dihydroxyverbindungen sind z. B. in den US-Patentschriften 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 956, 2 211 977, der französischen Patentschrift 1 156 518 und in der Monographie »H. Schnell, Chemistry and Physics of Polycarbonates,

Interscience Publishers, New York, 1964« beschrieben.

Bevorzugte Bisphenole sind die der Formel (6)

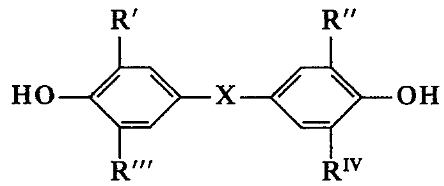

(6)

in der

R' bis $R^{IV}$ gleich oder verschieden sind und H, $C_1$—$C_4$-Alkyl, Cl oder Br bedeuten und in der

X eine Bindung, $C_1$—$C_8$-Alkylen, $C_2$—$C_8$-Alkyliden, $C_5$—$C_{15}$-Cycloalkylen, $C_5$—$C_{15}$-Cycloalkyliden, $-SO_2-$ oder

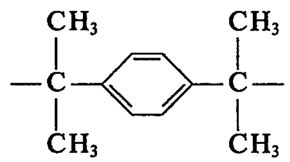

ist.

Beispiele für diese Bisphenole sind:

4,4'-Dihydroxydiphenyl
2,2-Bis-(4-hydroxyphenyl)-propan
2,4-Bis-(4-hydroxyphenyl)-2-methylbutan
1,1-Bis-(4-hydroxyphenyl)-cyclohexan
α,α'-Bis-(4-hydroxyphenyl)-p-diisopropylbenzol
2,2-Bis-(3-methyl-4-hydroxyphenyl)-propan
2,2-Bis-(3-chlor-4-hydroxyphenyl)-propan
Bis-(3,5-dimethyl-4-hydroxyphenyl)-methan
2,2-Bis-(3,5-dimethyl-4-hydroxyphenyl)-propan
Bis-(3,5-dimethyl-4-hydroxyphenyl)-sulfon
2,4-Bis-(3,5-dimethyl-4-hydroxyphenyl)-2-methylbutan
1,1-Bis-(3,5-dimethyl-4-hydroxyphenyl)-cyclohexan
α,α'-Bis-(3,5-dimethyl-4-hydroxyphenyl)-p-diisopropylbenzol
2,2-Bis-(3,5-dichlor-4-hydroxyphenyl)-propan
2,2-Bis-(3,5-dibrom-4-hydroxyphenyl)-propan.

Besonders bevorzugte Bisphenole sind z. B.:

2,2-Bis-(4-hydroxyphenyl)-propan
2,2-Bis-(3,5-dimethyl-4-hydroxyphenyl)-propan
2,2-Bis-(3,5-dichlor-4-hydroxyphenyl)-propan
2,2-Bis-(3,5-dibrom-4-hydroxyphenyl)-propan
1,1-Bis-(4-hydroxyphenyl)-cyclohexan

Bevorzugte aromatische Polycarbonate sind solche, denen ein oder mehrere der als bevorzugt genannten Bisphenole zugrundeliegen. Besonders bevorzugt werden Copolycarbonate, denen 2,2-Bis-(4-hydroxyphenyl)-propan und eines der anderen als besonders bevorzugt genannten Bisphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenyl)-propan.

Die aromatischen Polycarbonate können nach bekannten Verfahren hergestellt werden, so z. B. nach dem Schmelzumesterungsverfahren aus Bisphenolen und Diphenylcarbonat und dem Zweiphasengrenzflächenverfahren aus Bisphenolen und Phosgen, wie es in der oben genannten Literatur beschrieben ist.

Die aromatischen Polycarbonate können auch durch den Einbau geringer Mengen an Polyhydroxyverbindungen, z. B. 0,05—2,0 Mol-% (bezogen auf die eingesetzten Bisphenole), verzweigt sein. Polycarbonate dieser Art sind z. B. in den deutschen Offenlegungsschriften 1 570 533, 1 595 762, 2 116 974, 2 113 347, der britischen Patentschrift 1 079 821 und in der US-Patentschrift 3 544 514 beschrieben. Einige der verwendbaren Polyhydroxyverbindungen sind beispielsweise

Phloroglucin, 4,6-Dimethyl-2,4, 6-tri-(4-hydroxyphenyl)-hepten-2,
4,6-Dimethyl-2,4, 6-tri-(4-hydroxyphenyl)-heptan,
1,3,5-Tri-(4-hydroxyphenyl)-benzol, 1,1,1-Tri-(4-hydroxyphenyl)-ethan,

Tri-(4-hydroxyphenyl)-phenylmethan,
2,2-Bis[4,4-Bis(4-hydroxyphenyl)-cyclohexyl]propan,
2,4-Bis-(4-hydroxyphenyl-isopropyl)-phenol,
2,6-Bis-(2'-hydroxy-5'-methyl-benzyl)-4-methyl-phenol,
2,4-Dihydroxybenzoesäure, 2-(4-Hydroxyphenyl)-2-(2,4-dihydroxyphenyl)-propan und
1,4-Bis-(4',4''-dihydroxytriphenyl-methyl)-benzol.

Die aromatischen-thermoplastischen Polycarbonate sollen in der Regel Molekulargewichte $\overline{M}_w$ von 10 000 bis über 200 000, vorzugsweise von 20 000 bis 80 000 haben.

Als geeignete Alkali- oder Erdalkalisalze gemäß Komponente A) im Sinne der Erfindung sind die in der DE-OS-2 931 172 als interne Antistatika genannten Alkali- oder Erdalkalisalze der allgemeinen Formel (1)

$$(R)_{1-4}\!-\!A\!-\![(SO_3)_n M_m]_y \qquad (1)$$

mit A Arylrest mit 1–4 aromatischen Ringen,
R $C_4$–$C_{20}$-Alkyl, Alkenyl, $C_6$–$C_{20}$-Cycloalkyl, Cycloalkenyl,
M Kalium, Natrium oder Lithium bei $m = 1$ und $n = 1$,
M Magnesium, Calzium oder Barium bei $m = 1$ und $n = 2$,
y eine ganze Zahl von 1 bis 4,

oder Alkali- oder Erdalkalisalze polymerer aromatischer (Poly)-sulfonsäuren der allgemeinen Formel (2)

$$-\!\!\left[(R_1)_a\!-\!\underset{\underset{(SO_3)_n\ M_m}{|}}{(B)_b}\!-\!(R_2)_c\right]_x\!\!- \qquad (2)$$

mit $R_1$ $C_2$–$C_6$-Alkylen,
$R_2$ $R_1$ oder ein von $R_1$ unterschiedlicher $C_2$–$C_6$-Alkylenrest,
B 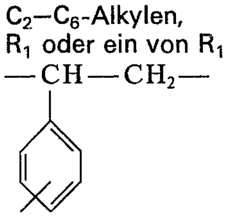

M, n, m entsprechend der Bedeutung der Formel (1),
a, b, c ganze Zahlen $\geq 1$ mit der Maßgabe, daß $b = 3$ bis 30 und $a + b + c = 100$ sind,
x eine Zahl der Größe, daß das polymere Salz ein mittleres Molekulargewicht (Gewichtsmittelmolekulargewicht) $\overline{M}_w$ von $800$–$10^6$ besitzt,

oder Alkali- oder Erdalkalisalze monomerer aromatischer Phosphonsäuren der allgemeinen Formel (3)

$$(R)_{1-4}\!-\!A\!-\![(PO_3)M_p]_z \qquad (3)$$

mit
A, R entsprechend der Bedeutung der Formel (1),
M Kalium, Natrium oder Lithium bei $p = 2$,
M Magnesium, Calcium, Barium bei $p = 1$,
z 1 oder 2,

oder Alkali- oder Erdalkalisalze monomerer saurer aromatischer Phosphorsäureester der allgemeinen Formel (4)

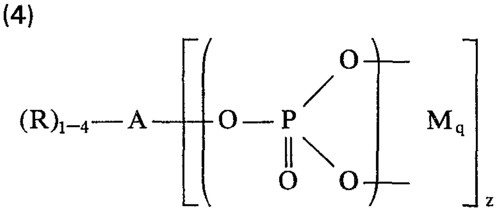
(4)

mit
A, R, z entsprechend der Bedeutung der Formel (3),
M Kalium, Natrium, Lithium mit $q = 2$,
M Magnesium, Calcium, Barium mit $q = 1$,

oder Alkali- oder Erdalkalisalze monomerer saurer aromatischer Phosphorsäureester der allgemeinen Formel (5)

$$\left.[(R)_{1-4}\!-\!A\!-\!O]_2\!-\!\overset{\overset{O}{\|}}{P}\!-\!C\right\}_e\!-\!M_d \qquad (5)$$

mit

A, R entsprechend der Bedeutung der Formel (5),
M Kalium, Natrium, Lithium mit $d = e = 1$,
M Magnesium, Calcium oder Barium mit $d = 1$ und $e = 2$.

Bevorzugt werden die Lithium- und Calciumsalze der allgemeinen Formeln (1) bis (5), deren wäßrige Lösungen oder deren Suspensionen in Wasser einen pH-Wert von 4,5 bis 8,5, insbesondere jedoch die, die einen pH-Wert von 5,5 bis 7,5 aufweisen.

Besonders bevorzugt werden monomere aromatische Sulfonsäuresalze der allgemeinen Formel (1.1)

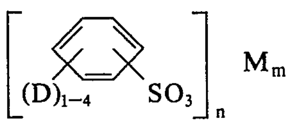

(1.1)

mit

D $C_4$—$C_{20}$-Alkyl, Alkenyl,
M Li und $m = n = 1$,
M Ca und $m = 1$, $n = 2$,

weiterhin Lithium- oder Calciumsalze von sulfonierten Copolymeren des Styrols mit $C_2$—$C_6$-Alkenen mit einem Styrolanteil von 3 bis 30 Gew.-%, sowie monomere aromatische Phosphonsäuresalze der allgemeinen Formel (3.1)

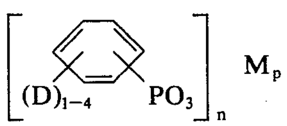

(3.1)

mit

D $C_4$—$C_{20}$-Alkyl, Alkenyl,
M Li und $p = 2$ und $n = 1$,
M Ca und $p = 1$ und $n = 1$.

Insbesondere bevorzugt werden

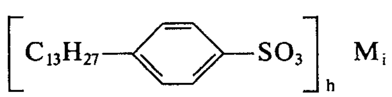

mit

M Li und $h = i = 1$,
M Ca und $i = 1$, $h = 2$,

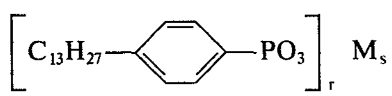

mit

M Li und $s = 2$, $r = 1$,
M Ca und $r = s = 1$,

sowie

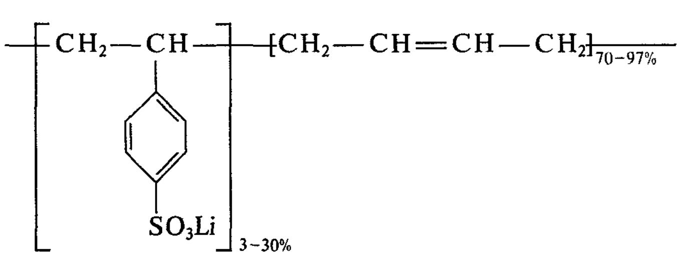

mit einem Molgewicht von $\overline{M}_w = 10\,000 - 800\,000$ (mittleres Gewichtsmittelmolekulargewicht).

Die erfindungsgemäß einsetzbaren Salze der Formeln (1) bis (5) sind, soweit nicht literaturbekannt, durch Neutralisation der entsprechenden freien Säuren mit den entsprechenden Alkali- bzw. Erdalkalihydroxiden in bekannter Weise, etwa in $H_2O$ oder $H_2O$/Alkoholgemischen herstellbar.

Erfindungsgemäß geeignete Verbindungen gemäß Komponente B) sind neutrale $C_3 - C_{18}$ Alkylester aliphatischer $C_4 - C_{18}$ Mono-, Di-, Tri- oder Tetracarbonsäuren, oder neutrale $C_3 - C_{18}$ Alkylester aromatischer $C_6 - C_{12}$ Mono-, Di-, Tri- oder Tetracarbonsäuren.

Beispielsweise seien genannt:

Pentaerythrittetrastearat, Stearinsäureisobutylat, Glycerintristearat, Phthalsäuredioctoat, Terephthaldistearat oder Naphthalin-1,5-dicarbonsäuredioctoat.

Erfindungsgemäß bevorzugte Verbindungen gemäß Komponente B) sind:

Distearylcarbonat,
Pentaerythrittetrastearat und
Phthalsäure-dioctoat.

Erfindungsgemäß besonders bevorzugte Verbindung gemäß Komponente B) ist:

Phthalsäuredioctoat.

Die Einarbeitung der erfindungsgemäß verwendbaren Komponenten A) und B) der synergistisch wirksamen Stoffgemische in die Polycarbonatformmassen kann gemeinsam als Vorabgemisch oder einzeln in beliebiger Reihenfolge nacheinander oder einzeln aber gemeinsam nach bekannten Methoden erfolgen.

Die Einarbeitung der Komponenten A) und B) kann in Substanz oder als Lösungen wie beispielsweise als Methylenchlorid- oder Methylenchloridchloroform-Lösungen erfolgen.

Die Einarbeitung in die Polycarbonatformmassen kann auch mit der Folienherstellung gekoppelt sein.

Die Herstellung der erfindungsgemäßen antistatisch ausgerüsteten Polycarbonatextrusionsfolien kann beispielsweise durch gemeinsames Einmischen der antistatisch wirksamen Alkali- oder Erdalkalisalze der allgemeinen Formeln (1) bis (5) und der Verbindungen gemäß Komponente B) in den benötigten Mengen in die Polycarbonatschmelze auf einem handelsüblichen Extruder mit Entgasungszone erfolgen, der über einen Adapter mit einer Breitschlitzdüse verbunden ist. Nach Austritt der noch plastischen Folien aus der Düse werden diese auf einem Kühlrost, einer Chillroll-Anlage oder einem Dreiwalzenstuhl auflaufen lassen, wobei die Temperatur des jeweiligen Polymeren abgesenkt wird. Dabei erstarren die Folien und können aufgewickelt werden (siehe beispielsweise DE-OS-2 437 508).

Nach einem ebenfalls gebräuchlichen Herstellungsverfahren kann man die antistatisch wirksamen Alkali- oder Erdalkalisalze der allgemeinen Formeln (1) bis (5) und die Verbindungen gemäß Komponente B) mit einer Teilmenge des aromatischen Polycarbonats zu einem Konzentrat vermischen, um dieses Konzentrat anschließend mit der Restmenge an aromatischem Polycarbonat in einem Extrusionsgang zu vereinigen, wobei man die antistatischen Polycarbonatfolien mit dem berechneten Gehalt des Antistatikadditivs der allgemeinen Formel (1) bis (5) und dem berechneten Gehalt an Verbindungen gemäß Komponente B) erhält. Für die Herstellung der erfindungsgemäßen Extrusionsfolien lassen sich die üblichen Breitschlitzdüsen verwenden. Für blasverformtes Polycarbonat werden die üblichen Blasköpfe verwendet.

Es ist gleichfalls möglich, nach dem Reaktions- und Waschprozeß der Polycarbonatherstellung die synergistisch wirkenden Komponenten A) und B) in den benötigten Gewichtsmengen in die Polycarbonatlösung einzutragen und nach dem Aufkonzentrieren dieser Lösung über einen Eindampfextruder zu Granulat oder direkt über eine Breitschlitzdüse zu den erfindungsgemäßen Polycarbonatextrusionsfolien aufzuarbeiten.

Die Herstellung erfindungsgemäßer Polycarbonatgießfolien läßt sich nach dem Gießverfahren aus einer gemeinsamen Lösung der Polycarbonate und erfindungsgemäßen synergistischen Mischung in Methylenchlorid oder in einem Methylenchloridchloroformgemisch durchführen. Dieses Verfahren der Folienherstellung wird beispielsweise in der DAS-1 274 274 oder der DOS-2 517 032 beschrieben.

Die erfindungsgemäßen Polycarbonatformmassen, auch die Polycarbonatfolien, können außerdem andere Materialien wie Pigmente, thermische Stabilisatoren, Ultraviolettlichtstabilisatoren, Formtrennmittel, Glasfasern und Glaskugeln enthalten (vgl. dazu auch DE-OS-2 721 887. Die erfindungsgemäß antistatisch ausgerüsteten Polycarbonatfolien lassen sich auf den bekannten Polycarbonatfolieneinsatzgebieten verwenden wie beispielsweise auf dem Elektrosektor, insbesondere jedoch zur Herstellung von Streulichtfolien. Die erfindungsgemäß antistatisch ausgerüsteten Polycarbonatfolien sind vor allem auch in Betrieben verwendbar (als Türvorhang), in denen eine elektrostatische Entladung als Zündfunke für brennbare Materialien vermieden werden muß.

Die erfindungsgemäßen Polycarbonatformmassen können außerdem für die Herstellung von Polycarbonatfolien für Sonnenschutzschirme für Fensterscheiben verwendet werden, weil es sehr wichtig ist, daß Polycarbonatfolien für derartige Anwendungszwecke antistatisch ausgerüstet sind, um während der Herstellung Schrumpfung zu vermeiden und während des Gebrauchs Staubbefall zu verhindern.

Die Herstellung der in den nachfolgenden Beispielen genannten erfindungsgemäßen Polycarbonatextrusionsfolien sowie die Herstellung der in den Vergleichsbeispielen 2 bis 4 genannten

Polycarbonatfolien erfolgte durch Zugabe der antistatisch wirksamen Alkali- oder Erdalkalisalze der allgemeinen Formeln (1) bis (5) und gegebenenfalls der Verbindungen gemäß Komponente B) zu der Polycarbonatlösung nach dem Waschprozeß der Polycarbonatherstellung, Aufkonzentration der Lösung nach einer Voreindampfung über einen Eindampfextruder und Extrusion über eine Breitschlitzdüse zu Folien von 0,1 mm Schichtdicke.

Das zur Herstellung der Folien verwendete Polycarbonat war ein aromatisches Polycarbonat auf Basis von Bis-2,2-(4-hydroxyphenyl)-propan (Bisphenol A), das nach dem Zweiphasengrenzflächenverfahren hergestellt wurde und eine relative Lösungsviskosität von $\eta$ rel = 1,32 besaß. Die Messung der relativen Lösungsviskosität erfolgte bei 25° C in 0,5gew.-%iger Lösung in Methylenchlorid. Die in Beispiel 1 genannte Folie ist eine additivfreie 0,1 mm dicke Extrusionsfolie aus Bisphenol-A-Polycarbonat mit $\eta$ rel 1,32 und dient zum Vergleich.

Die in den nachfolgenden Beispielen beschriebene Prüfung des Oberflächenwiderstandes $R_{OA}$ erfolgte nach DIN 53 482, die Prüfung der Entaufladung $E_e$ der Folien erfolgte nach DIN 53 486 bei 23° C und einer relativen Luftfeuchte von 50%. Die Prüfung des spezifischen Durchgangswiderstandes $\varrho_D$ erfolgte gemäß der Vorschrift VDE 0303 Teil 4.

Tabelle 1:
Beispiele (die Gew.-%-Angaben beziehen sich auf 100 Gew.-% der Gesamtpolycarbonatmischung)

| Bsp. | Additiv | | Gew.-% | Carriersubstanz | Gew.-% |
|---|---|---|---|---|---|
| 1 | – | (zum Vergleich) | – | – | – |
| 2 | 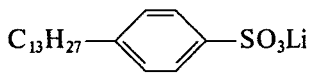 | (zum Vergleich) | 2 | – | – |
| 3 | 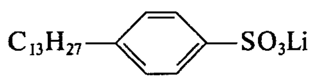 | (zum Vergleich) | 1 | – | – |
| 4 | 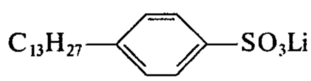 | (zum Vergleich) | 0,5 | – | – |
| 5 | 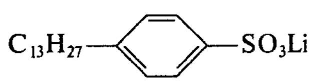 | | 0,5 | Pentaerythrittetrastearat | 0,3 |
| 6 | 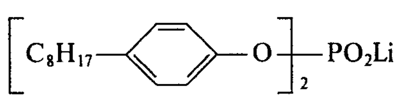 | | 0,5 | Phthalsäuredioctoat | 0,3 |

Tabelle 2: Vergleich der antistatischen Folieneigenschaften:

| Beispiel | Reibungspartner (50 Reibungen) | Endaufladung $E_e$ (V/cm) | Oberflächenwiderstand $R_{OA}$ (Ω) |
|---|---|---|---|
| 1 | Polyacrylnitrilgewebe (PAN) | +24 000 | $10^{14}$ |
| 1 | Polyamid-6-Gewebe (PA-6) | +30 000 | $10^{14}$ |
| 2 | PA-6 | <+100 | $3 \cdot 10^{10}$ |
| 2 | PAN | <−100 | $5 \cdot 10^{10}$ |
| 3 | PAN | −1 300 | $4 \cdot 10^{10}$ |
| 3 | PA-6 | −450 | $4 \cdot 10^{10}$ |
| 4 | PA-6 | −3 730 | $10^{11}$ |
| 4 | PAN | <+1 780 | $10^{11}$ |
| 5 | PA-6 | <−100 | $5 \cdot 10^{10}$ |
| 5 | PAN | <−100 | $6 \cdot 10^{10}$ |
| 6 | PA-6 | <−100 | $4 \cdot 10^{10}$ |
| 6 | PAN | <+100 | $5 \cdot 10^{10}$ |

Tabelle 2 (Fortsetzung)

| Beispiel | Halbwertszeit der Entladung $t_H$ (sec) | Spez. Durchgangswiderstand $\rho_D$ (Ω · cm) |
|---|---|---|
| 1 | >3600 | $>10^{15}$ |
| 1 | >3600 | $>10^{15}$ |
| 2 | 6 | $>10^{15}$ |
| 2 | 5 | $>10^{15}$ |
| 3 | 30 | $>10^{15}$ |
| 3 | 180 | $>10^{15}$ |
| 4 | >3600 | $>10^{15}$ |
| 4 | >3600 | $>10^{15}$ |
| 5 | – | $>10^{15}$ |
| 5 | – | $>10^{15}$ |
| 6 | – | $>10^{15}$ |
| 6 | – | $>10^{15}$ |

Tabelle 3

Vergleich der mechanischen Eigenschaften der 0,1 mm dicken Folien der Beispiele 1 bis 7 (die Messung der Zugfestigkeit und der Reißdehnung der Folien erfolgte gemäß DIN 53 455):

| Beispiel | Zugfestigkeit (MPa) | Reiß-dehnung (%) |
|---|---|---|
| 1 | 100 | 120 |
| 2 | 65 | 50 |
| 3 | 80 | 70 |
| 4 | 100 | 115 |
| 5 | 100 | 115 |
| 6 | 100 | 115 |

**Patentansprüche**

1. Synergistisch wirksame Stoffgemische bestehend aus

A) 0,1 bis 1 Gew.-Teilen an Alkali- oder Erdalkalisalzen von

A1) einer monomeren aromatischen Sulfonsäure der allgemeinen Formel (1)

$$(R)_{1-4}-A-[(SO_3)_n M_m]_y \qquad (1)$$

mit

A Arylrest mit 1–4 aromatischen Ringen,
R $C_4$–$C_{20}$-Alkyl, $C_4$–$C_{20}$-Alkenyl, $C_6$–$C_{20}$-Cycloalkyl, $C_6$–$C_{20}$-Cycloalkenyl,
M Alkalimetall und m = n = 1,
M Erdalkalimetall und m = 1, n = 2,
y eine ganze Zahl von 1 bis 4, oder

A2) einer polymeren aromatischen (Poly)-sulfonsäure der allgemeinen Formel (2)

$$\left[ (R_1)_a - \underset{(SO_3)_n \; M_m}{(B)_b} - (R_2)_c \right]_x \qquad (2)$$

mit

$R_1$ $C_2$–$C_6$-Alkylen,
$R_2$ $R_1$ oder ein von $R_1$ unterschiedlicher $C_2$–$C_6$-Alkylenrest,
B 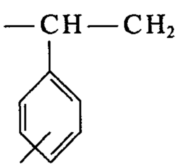

M, n, m entsprechend der Bedeutung der Formel (1),
a, b, c ganze Zahlen ≥1 mit der Maßgabe, daß b = 3 bis 30 und a + b + c = 100,
x eine Zahl der Größe, daß das polymere Salz ein mittleres Molekulargewicht (Gewichtsmittelmolekulargewicht) $\overline{M}_w$ von 800 bis $10^6$ besitzt, oder

A3) einer monomeren aromatischen Phosphonsäure der allgemeinen Formel (3)

$$(R)_{1-4}-A-[(PO_3)M_p]_z \qquad (3)$$

mit

A, R entsprechend der Bedeutung der Formel (1),
M Alkalimetall und p = 2,
M Erdalkalimetall und p = 1,
z 1 oder 2, oder

A4) eines monomeren sauren aromatischen Phosphorsäureesters der allgemeinen Formel (4)

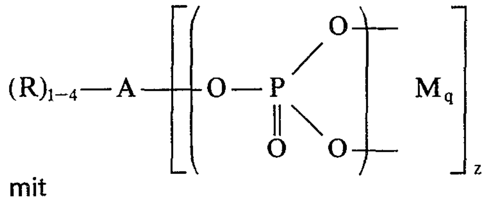 (4)

mit

A, R, z entsprechend der Bedeutung der Formel (3),
M Alkalimetall und q = 2,
M Erdalkalimetall und q = 1 oder

A5) eines monomeren sauren aromatischen Phosphorsäureesters der allgemeinen Formel (5)

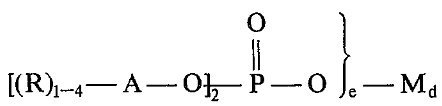 (5)

mit

A, R entsprechend der Bedeutung der Formel (1),
M Alkalimetall und d = e = 1,
M Erdalkalimetall mit d = 1 und e = 2,

und

B) 0,05 bis 0,5 Gew.-Teilen an Verbindungen von
B2) neutralen $C_3-C_{18}$-Alkylestern aliphatischer $C_4-C_{18}$-Mono-, Di-, Tri- oder Tetracarbonsäuren, oder
B3) neutralen $C_3-C_{18}$-Alkylestern aromatischer $C_6-C_{12}$-Mono-, Di-, Tri- oder Tetracarbonsäuren.

2. Synergistisch wirksame Stoffgemische bestehend aus

A) 0,3 bis 0,8 Gew.-Teilen an Alkali- oder Erdalkalisalzen gemäß Anspruch 1.

3. Synergistisch wirksame Stoffgemische bestehend aus

B) 0,2 bis 0,4 Gew.-Teilen an Verbindungen von B2) oder B3) gemäß Ansprüchen 1 und 2.

4. Verwendung der synergistisch wirksamen Stoffgemische gemäß Ansprüchen 1 bis 3 zur antistatischen Ausrüstung von Polycarbonatformmassen.

5. Verwendung gemäß Anspruch 4 zur antistatischen Ausrüstung von Polycarbonatfolien.

6. Verwendung gemäß Anspruch 5 zur antistatischen Ausrüstung von Polycarbonatextrusionsfolien.

7. Polycarbonatformmassen mit einem Gehalt von 0,1 Gew.-% bis 1 Gew.-% an Alkalisalzen oder Erdalkalisalzen gemäß Komponente A) und von 0,05 Gew.-% bis 0,5 Gew.-% an Verbindungen gemäß Komponente B), wobei die Gewichtsprozente sich jeweils auf Gesamtgewicht aus Polycarbonat plus Komponente A) plus Komponente B) beziehen, und wobei die Komponenten A) und B) die Bedeutung aus Anspruch 1 haben.

8. Polycarbonatfolien gemäß Anspruch 7.

9. Polycarbonatextrusionsfolien gemäß Anspruch 8.

10. Verwendung der Polycarbonatfolien gemäß Ansprüchen 8 und 9 zur Herstellung von Sonnenschutzschirmen für Fensterscheiben.

**Claims**

1. Synergistically active mixtures of substances constisting of

A) 0.1 to 1 part by weight of alkali metal salts or alkaline earth metal salts of
A1) a monomeric aromatic sulphonic acid, of the general formula (1)

$$(R)_{1-4}-A-[(SO_3)_n M_m]_y \qquad (1)$$

in which

A an aryl radical with 1–4 aromatic rings,
R $C_4$–$C_{20}$-alkyl, $C_4$–$C_{20}$-alkenyl, $C_6$–$C_{20}$-cycloalkyl or $C_6$–$C_{20}$-cycloalkenyl,
M an alkali metal and $m = n = 1$, or
M an alkaline earth metal and $m = 1$ and $n = 2$, and
Y an integer from 1 to 4, or

A2) a polymeric aromatic (poly)-sulphonic acid, of the general formula (2)

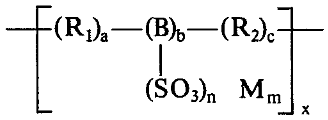 (2)

in which

$R_1$ is $C_2$–$C_6$-alkylene,
$R_2$ is $R_1$ or a $C_2$–$C_6$-alkylene radical which is different from $R_1$,
B is 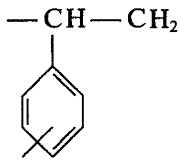

M, n and m are as defined in formula (1),
a, b and c are integers $\geq 1$, with the proviso that $b = 3$ to 30 and $a + b + c = 100$, and
x is a number such that the polymeric salt has an average molecular weight (weight-average molecular weight) $\overline{M}_w$ of 800 to $10^6$, or

A3) a monomeric aromatic phosphonic acid, of the general formula (3)

$$(R)_{1-4}—A—[(PO_3)M_p]_z \quad (3)$$

in which

A and R are as defined in formula (1),
M is an alkali metal and $p = 2$, or
M is an alkaline earth metal and $p = 1$, and
z is 1 or 2, or

A4) a monomeric aromatic phosphoric acid half-ester, of the general formula (4)

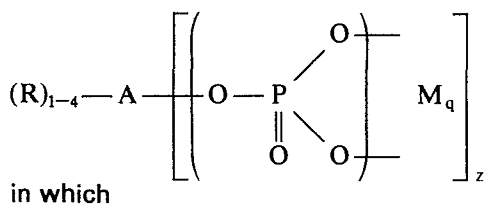 (4)

in which

A, R and z are as defined in formula (3), and
M is an alkali metal and $q = 2$, or
M is an alkaline earth metal and $q = 1$, or

A5) a monomeric phosphoric acid half-ester, of the general formula (5)

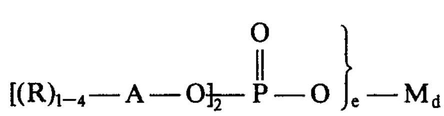 (5)

in which
A and R are as defined in formula (1) and
M is an alkali metal and $d = e = 1$, or
M is an alkaline earth metal and $d = 1$ and $e = 2$,

and

B) 0.05 to 0.5 part by weight of compounds chosen from
B2) neutral $C_3 - C_{18}$-alkyl esters of aliphatic $C_4 - C_{18}$-mono-, -di-, -tri- or -tetra-carboxylic acids or
B3) neutral $C_3 - C_{18}$-alkyl esters of aromatic $C_6 - C_{12}$-mono-, -di-, -tri- or -tetra-carboxylic acids.

2. Synergistically active mixtures of substances consisting of

A) 0.3 to 0.8 part by weight of alkali metal salts or alkaline earth metal salts according to Claim 1.

3. Synergistically active mixtures of substances consisting of

B) 0.2 to 0.4 part by weight of compounds from B2) or B3) according to Claims 1 and 2.

4. Use of the synergistically active mixtures of substances according to Claims 1 to 3 for providing polycarbonate moulding compositions with an antistatic finish.
5. Use according to Claim 4 for providing polycarbonate films with an antistatic finish.
6. Use according to Claim 5, for providing extruded polycarbonate films with an antistatic finish.
7. Polycarbonate moulding compositions containing 0.1% by weight to 1% by weight of alkali metal salts or alkaline earth metal salts according to component A) and 0.05% by weight to 0.5% by weight of compounds according to component B), the percentages by weight in each case relating to the total weight of polycarbonate plus component A) plus component B), and components A) and B) having the meaning given in Claim 1.
8. Polycarbonate films according to Claim 7.
9. Extruded polycarbonate films according to Claim 8.
10. Use of the polycarbonate films according to Claims 8 and 9 for the production of sunscreens for windowpanes.

**Revendications**

1. Mélanges de substances à effet synergétique consistant en:

A) 0,1 à 1 partie en poids de sels alcalins ou alcalinoterreux de
A1 un acide sulfonique aromatique monomère de formule générale 1

$$(R)_{1-4}-A-[(SO_3)_nM_m]_y \qquad (1)$$

dans laquelle

A représente un reste aryle contenant 1 à 4 noyaux aromatiques,
R représente un groupe alkyle en $C_4$—$C_{20}$, alcényle en $C_4$—$C_{20}$, cycloalkyle en $C_6$—$C_{20}$, cycloalcényle en $C_6$—$C_{20}$,
M représente un métal alcalin et m = n = 1,
M représente un métal alcalinoterreux et m = 1 et n = 2,
y est un nombre entier de 1 à 4, ou bien

A2) un acide (poly)-sulfonique aromatique polymère de formule générale 2

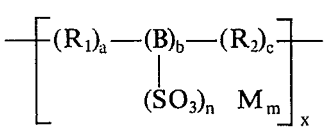 (2)

dans laquelle

$R_1$ représente un groupe alkylène en $C_2$—$C_6$,
$R_2$ a la même signification que $R_1$ ou représente un reste alkylène en $C_2$—$C_6$, différent de $R_1$,
B représente 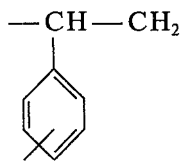

M, n et m ont les significations indiquées en référence à la formule 1,
a, b, c sont des nombres entiers supérieurs ou égaux à 1, étant spécifié que b = 3 à 30 et a + b + c = 100,
x est un nombre tel que le sel polymère possède un poids moléculaire moyen (moyenne en poids) $\overline{M}_w$ de 800 à $10^6$, ou bien

A3) un acide phosphonique aromatique monomère de formule générale 3

$$(R)_{1-4}-A-[(PO_3)M_p]_z \qquad (3)$$

dans laquelle

A et R ont les significations indiquées en référence à la formule 1,
M représente un métal alcalin et $p = 2$,
M représente un métal alcalinoterreux et $p = 1$,
z est égal à 1 ou 2, ou bien

A4) un ester phosphorique aromatique acide monomère de formule générale 4

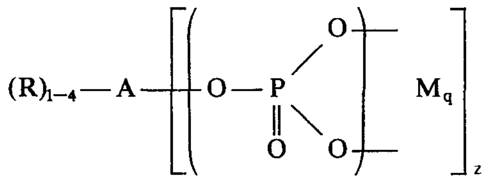
(4)

dans laquelle

A, R, z ont les significations indiquées en référence à la formule 3,
M représente un métal alcalin et $q = 2$,
M représente un métal alcalinoterreux et $q = 1$, ou bien

A5) un ester phosphorique aromatique acide monomère de formule générale 5

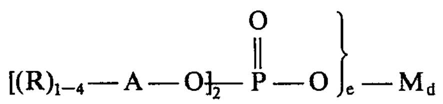
(5)

dans laquelle

A et R ont les significations indiquées en référence à la formule 1,
M représente un métal alcalin et $d = e = 1$
M représente un métal alcalinoterreux et $d = 1$ et $e = 2$,

et

B) 0,05 à 0,5 partie en poids de composés de
B2) esters alkyliques neutres en $C_3-C_{18}$ d'acides mono-, di-, tri- ou tétracarboxyliques aliphatiques en $C_4-C_{18}$, ou bien
B3) esters alkyliques neutres en $C_3-C_{18}$ d'acides mono-, di-, tri- ou tétracarboxyliques aromatiques en $C_6-C_{12}$.

Mélanges de substances à effet synergétique consistant en:

A) 0,3 à 0,8 partie en poids de sels alcalins ou alcalinoterreux selon la revendication 1.

3. Mélanges de substances à effet synergétique consistant en:

B) 0,2 à 0,4 partie en poids de composés de B2) ou B3) selon les revendications 1 et 2.

4. Utilisation des mélanges de substances à effet synergétique selon les revendications 1 à 3 pour l'apprêtage antistatique de matières à mouler en polycarbonates.

5. Utilisation selon la revendication 4, pour l'apprêtage antistatique de feuilles de polycarbonates.

6. Utilisation selon la revendication 5, pour l'apprêtage antistatique de feuilles extrudées en polycarbonates.

7. Matières à mouler en polycarbonates contenant de 0,1% en poids à 1% en poids de sels alcalins ou alcalinoterreux selon composant A) et de 0,05% en poids à 0,5% en poids de composés du composant B), les % en poids se rapportant tous au poids total du polycarbonate plus composant A) plus composant B), les composants A) et B) étant tels que définis dans la revendication 1.

8. Feuille de polycarbonates selon la revendication 7.

9. Feuilles extrudées en polycarbonates selon la revendication 8.

10. Utilisation des feuilles de polycarbonates selon les revendications 8 et 9 pour la fabrication d'écrans antisolaires pour vitres.